# EUROPEAN PATENT APPLICATION

(11) **EP 4 660 164 A1**
(43) Date of publication of application: **10.12.2025**
(21) Application number: 23921507.2
(22) Date of filing: 28.12.2023
(51) Int. Cl.: C03C 3/064, C03C 3/066, C03C 3/068, C03C 3/089, C03C 3/095, C03C 3/097, C03C 12/00, C03B 19/10, C05B 9/00

(54) **GLASS COMPOSITION FOR ALGAE GROWTH AND METHOD FOR MANUFACTURING GLASS POWDER**

(30) Priority: 10.02.2023 KR 20230018110
(71) Applicant: LG Electronics Inc., Yeongdeungpo-gu Seoul 07336 (KR)
(72) Inventor: KIM, Namjin, Seoul 08592 (KR); KIM, Daesung, Seoul 08592 (KR); KIM, Young Seok, Seoul 08592 (KR); SON, Jegoo, Seoul 08592 (KR)
(74) Representative: Ter Meer Steinmeister & Partner
(86) International application number: PCT/KR2023/021905
(87) International publication number: WO 2024/167136

(57) **Abstract**

The present invention discloses a glass composition for algae growth and a method for manufacturing the same, the glass composition including a trace metal oxide added thereto and containing an inorganic component capable of aiding the growth of marine plants and being implemented as a water-soluble glass which dissolves well in water, so that it can appropriately supply nutrients to algae and the like in the sea. As a result, the glass composition for algae growth and the method for manufacturing the same according to the present invention can promote the cultivation of diatoms as effectively as possible.

## Description

### Technical Field

The present invention relates to a glass composition for algae growth and a method for manufacturing glass powder thereof.

### Background Art

The fishing and fisheries industry of the Republic of Korea is experiencing a continuous decline in fishery production due to a labor shortage caused by a domestic fishing population decrease and aging, climate change, and a reduction in fishery resources. Because of this, the aquaculture industry is promising as a future industry, and is also a very important industry in terms of ensuring food security.

In order to transform aquaculture products into a sustainable industry, strict environmental management of the production space for aquaculture organisms is necessary. In order to raise aquaculture organisms well, it is a fundamental requirement to provide an appropriate water quality environment to them and protect them from diseases, and besides, it is very important to prepare the nutrients required by the aquaculture organisms.

In the case of plants such as algae and phytoplankton, which are at the lowest level of the marine food chain, solar energy and specific inorganic components serve as nutrients.

Therefore, there is a need to develop a glass material capable of continuously supplying a specific inorganic component over a long period of time.

### Related art documents

### Patent documents

(Patent Document 1) KR Patent Application Publication No. 10-2014-0123130 (Published on October 22, 2014)

### Disclosure

### Technical Problem

It is an object of the present invention to provide a glass composition for algae growth and a method for manufacturing the same, the glass composition including a trace metal oxide added thereto and containing an inorganic component capable of aiding the growth of marine plants and being implemented as a water-soluble glass which dissolves well in water, so that it can appropriately supply nutrients to algae and the like in the sea.

Additionally, it is an object of the present invention to provide a glass composition for algae growth and a method for manufacturing the same, the glass composition being capable of promoting the growth of microalgae by continuously supplying inorganic components over a long period of time.

Additionally, it is an object of the present invention to provide a glass composition for algae growth and a method for manufacturing the same, the glass composition including components required in microalgae cultivation systems or aquaculture farms, and being capable of precisely controlling the degree of dissolution in water to appropriately supply nutrients.

The purposes of the present invention are not limited to the purposes mentioned above, and other purposes and advantages of the present invention which are not mentioned can be appreciated from the following description, and will be more clearly appreciated by the embodiments of the present invention. Furthermore, it is readily understood that the objects and advantages of the present invention can be achieved by the means set forth in the claims and combinations thereof.

### Means of solving the problems

The glass composition for algae growth and the method for manufacturing the same according to the present invention have a trace metal oxide added thereto and containing an inorganic component capable of aiding the growth of marine plants, and are implemented as a water-soluble glass which dissolves well in water, so that they can appropriately supply nutrients to algae and the like in the sea.

As a result, the glass composition for algae growth and the method for manufacturing the same according to the present invention can promote the cultivation of diatoms as effectively as possible.

Additionally, the glass composition for algae growth and the method for manufacturing the glass powder according to the present invention promote the growth of microalgae by continuously supplying inorganic components over a long period of time.

Thereby, the glass composition for algae growth and the method for manufacturing the same according to the present invention can include components required in microalgae cultivation systems or aquaculture farms, and can precisely control the degree of dissolution in water to appropriately supply nutrients.

Additionally, when the glass composition for algae growth and the method for manufacturing the same according to an embodiment of the present invention is used as a glass fertilization agent for promoting marine algae growth, it can be manufactured in the form of a plate or pack and placed at marine algae growth spots such as artificial reefs, thereby supplying the inorganic nutrients in appropriate amounts required per hour to marine organisms to build a sea forest.

To achieve the above, the glass composition for promoting algal growth according to an embodiment of the present invention includes 1 to 50 wt% of SiO₂; 20 to 70 wt% in total of at least one kind selected from B₂O₃ and P₂O₅; 1 to 30 wt% in total of at least one kind selected from Na₂O and K₂O; 0.1 to 30 wt% in total of at least one kind selected from MgO and CaO; and 0.1 to 30 wt% of trace metal oxide, wherein the trace metal oxide includes at least one kind selected from Fe₂O₃, CuO, NiO₂, Co₃O₄, CdO, and ZnO.

Here, it is preferable that SiO₂ is added in an amount of 10 to 30 wt%.

Additionally, it is preferable that B₂O₃ is added in an amount of 15 to 35 wt%, and that P₂O₅ is added in an amount of 1 to 20 wt%.

Besides, it is preferable that Na₂O is added in an amount of 1 to 10 wt%, and that K₂O is added in an amount of 10 to 29 wt%.

The trace metal oxide is added in a total amount of 20 to 30 wt% of at least one kind selected from Fe₂O₃ and ZnO.

Here, the trace metal oxide is added in a total amount of 5 wt% or less of at least one kind selected from CuO, NiO₂, Co₃O₄, and CdO.

### [Advantageous Effects]

The present invention can have a trace metal oxide added thereto and containing an inorganic component capable of aiding the growth of marine plants, and be implemented as a water-soluble glass which dissolves well in water, so that it can appropriately supply nutrients to algae and the like in the sea.

As a result, according to the present invention, it is possible to promote the cultivation of diatoms as effectively as possible.

Also, according to an embodiment of the present invention, it is possible to promote the growth of microalgae by continuously supplying inorganic components over a long period.

Thereby, the present invention can include components required in microalgae cultivation systems or aquaculture farms, and can precisely control the degree of dissolution in water to appropriately supply nutrients.

Additionally, when the present invention is used as a glass fertilization agent for promoting marine algae growth, it can be manufactured in the form of a plate or pack and placed at marine algae growth spots such as artificial reefs, thereby supplying the inorganic nutrients in appropriate amounts required per hour to marine organisms to build a sea forest.

Besides, the present invention has excellent effectiveness in removing algae that cause red tides.

Also, the present invention can serve to supply feed organisms for abalone aquaculture farms.

In addition, the present invention allows for the customization of the supplied nutrients.

In addition to the effects described above, specific effects of the present invention will be described below together with specific matters for practicing the invention.

### Brief Description of Drawings

FIG. 1 is a process flowchart showing a method for manufacturing glass powder for algae growth according to an embodiment of the present invention.
FIG. 2 is a graph showing the OD (Optical Density, 680 nm) absorbance measurement results for each diatom growth trend using the antibacterial glass according to Example 1 and Comparative Example 1.

### Detailed Description for practicing the invention

The purposes, features and advantages described above will be described in detail below with reference to the accompanying drawings, so that a person having ordinary knowledge in the technical field to which the present invention pertains can easily practice the technical idea of the present invention. In describing the present invention, if it is determined that a detailed description of a known technology related to the present invention may unnecessarily obscure the gist of the present invention, the detailed description thereof will be omitted. Hereinafter, preferred embodiments of the present invention will be described in detail with reference to the accompanying drawings. In the drawings, like reference numerals are used to refer to like or similar components.

As used herein, singular expressions include plural expressions unless the context clearly dictates otherwise. Herein, the terms "be comprised of" or "comprise" should not be construed to necessarily include all of the various components or various steps described in the specification, and should be construed to mean that some of the components or some of the steps may not be included, or that additional components or steps may be included.

Hereinafter, a glass composition for algal proliferation and a method for manufacturing glass powder thereof according to several embodiments of the present invention will be described.

The glass composition for algae growth according to an embodiment of the present invention has a trace metal oxide added thereto and containing an inorganic component capable of aiding the growth of marine plants, and is implemented as a water-soluble glass which dissolves well in water, so that it can appropriately supply nutrients to algae and the like in the sea.

As a result, the glass composition for algae growth according to an embodiment of the present invention can promote the cultivation of diatoms as effectively as possible.

The diatom is a type of microalga having a size of approximately 10 to 200 µm, and can grow through suspended growth or attached growth in fresh water or seawater, wherever light, nutrients, and moisture are present. Diatoms produce organic matter through photosynthesis over a wide area globally, accounting for 40% of marine organism production and accounting for 25% of the total global organic matter production. Particularly, diatoms, unlike other algae, grow forming porous biosilica on their outer shells, and their pores have sizes and distributions different depending on the species, and exhibit higher-order structures.

Such diatoms can also be mass-produced, and are being effectively used across the entire industry. Particularly, nowadays, they have been intensively researched to be utilized in fields such as a biofertilizers, food and pharmaceuticals, feed and additives, wastewater treatment and environmental remediation, and alternative energy fields.

As described above, diatoms have diverse applicability, and thus are receiving increasing interest with regard to their cultivation from the industry. To this end, the glass composition for algae growth according to an embodiment of the present invention can promote the cultivation of diatoms as effectively as possible.

Also, the glass composition for algae growth according to an embodiment of the present invention promotes the growth of microalgae by continuously supplying inorganic components over a long period.

The fishing and fisheries industry of the Republic of Korea is experiencing a continuous decline in fishery production due to a labor shortage caused by a domestic fishing population decrease and aging, climate change, and a reduction in fishery resources. Because of this, the aquaculture industry is promising as a future industry, and is also a very important industry in terms of ensuring food security. In order to transform aquaculture products into a sustainable industry, strict environmental management of the production space for aquaculture organisms is necessary.

In order to raise aquaculture organisms well, it is a fundamental requirement to provide an appropriate water quality environment to them and protect them from diseases, and besides, it is very important to prepare the nutrients required by the aquaculture organisms. In the case of plants such as algae and phytoplankton, which are at the lowest level of the marine food chain, solar energy and specific inorganic components serve as nutrients. In view of the above, the glass composition for algae growth according to an embodiment of the present invention has been implemented as a material capable of supplying such inorganic components continuously over a long period.

Also, the glass composition for algae growth according to an embodiment of the present invention has easily controllable durability. Generally, in order to apply a glass compositions to the industry, their durability and chemical resistance are strengthened. However, contrary to this, elution properties may be maximized to be applied to bioactivity, pharmaceuticals, cosmetic products, and the like. That is, a glass compositions can be developed to be very robust or to dissolve very well.

The glass composition for algae growth according to an embodiment of the present invention continuously supplies inorganic components in aquaculture. Generally, as inorganic components that can aid in plant growth, P, K, Na, Fe, Mn, Cu, Zn, Ni, B, Mg, Ca, and the like are well known. And, through oxides including the components listed above, it is possible to implement a water-soluble a glass composition which dissolves well in water.

Thereby, the glass composition for algae growth according to an embodiment of the present invention can include components required in microalgae cultivation systems or aquaculture farms, and can precisely control the degree of dissolution in water to appropriately supply nutrients.

Also, the glass composition for algae growth according to an embodiment of the present invention can be utilized as a long-term usable sea fertilizer. Generally, in order to alleviate the whitening event phenomenon in coastal waters, fertilizers called fertilization agents, which promote the growth and reproduction of marine algae, are distrubuted, but they are swept away due to high ocean waves or dissolve quickly, making it difficult to achieve the expected effect.

However, when the glass composition for algae growth according to an embodiment of the present invention is used as a glass fertilization agent for promoting marine algae growth, it can be manufactured in the form of a plate or pack and placed at marine algae growth spots such as artificial reefs, thereby supplying the inorganic nutrients in appropriate amounts required per hour to marine organisms to build a sea forest.

Besides, the glass composition for algae growth according to an embodiment of the present invention has excellent effectiveness in removing algae that cause red tides. In the case of a dinoflagellate (Cochlodinium polykrikoides) that is one of the causes of red tide phenomena, its growth rate is significantly reduced when growing in the presence of a diatom (Skeletonema costatum) or a phytoplankton (Chaetoceros danicus). This is because the diatom can suppress the growth and swimming speed of the dinoflagellate. That is, if nutrients allowing for effective growth of the diatom are supplied to the sea, such dominance effect increases, so that it is possible to delay or prevent red tide occurrence in the sea.

Also, the glass composition for algae growth according to an embodiment of the present invention may serve to supply feed organisms for abalone aquaculture farms. In order to culture adherent diatoms used as initial feed organisms for abalone, a culturing medium of a constant concentration needs to be continuously supplied, and the water-soluble a glass composition enables consistent elution of ions, thereby facilitating the proliferation of diatoms to increase productivity and enable mass production of healthy abalone juvenile shellfish.

In addition, the glass composition for algae growth according to an embodiment of the present invention allows for the customization of the supplied nutrients. The kinds and ratios of inorganic nutrient substances required may vary depending on the kind of a marine organism (alga) whose growth is to be promoted, and thus a glass composition capable of optimally activating growth enhancement may be manufactured according to the target alga.

To this end, the glass composition for algae growth according to an embodiment of the present invention includes: 1 to 50 wt% of SiO₂; 20 to 70 wt% in total of at least one kind selected from B₂O₃ and P₂O₅; 1 to 30 wt% in total of at least one kind selected from Na₂O and K₂O; 0.1 to 30 wt% in total of at least one kind selected from MgO and CaO; and 0.1 to 30 wt% of trace metal oxide, wherein the trace metal oxide includes at least one kind selected from Fe₂O₃, CuO, NiO₂, Co₃O₄, CdO, and ZnO.

Here, it is preferable that SiO₂ is added in an amount of 10 to 30 wt%.

Additionally, it is preferable that B₂O₃ is added in an amount of 15 to 35 wt%, and that P₂O₅ is added in an amount of 1 to 20 wt%.

Besides, it is preferable that Na₂O is added in an amount of 1 to 10 wt%, and that K₂O is added in an amount of 10 to 29 wt%.

The trace metal oxide is added in a total amount of 20 to 30 wt% of at least one kind selected from Fe₂O₃ and ZnO.

Here, the trace metal oxide is added in a total amount of 5 wt% or less of at least one kind selected from CuO, NiO₂, Co₃O₄, and CdO.

Hereinafter, the roles and contents of each component of the glass composition for algae growth according to an embodiment of the present invention will be described in detail.

SiO₂becomes a key component serving like the framework in terms of the structural aspect of the glass, while acting as both a growth nutrient for diatoms and a glass former that enhances the formability of the glass composition to enable vitrification.

It is preferable that such SiO₂ is added in an amount of 1 to 50 wt% based on the total weight of the glass composition for algae growth according to the present invention; its more preferable range may be 10 to 30 wt%; and a most preferable range may be 15 to 25 wt%. When the addition amount of SiO₂ is less than 1 wt%, a milky degeneration or heterogenization, in which transparent glass is mixed, may occur because network-forming oxides are insufficient resulting in deviation from the vitrification region. On the other hand, when the addition amount of SiO₂ exceeds 50 wt%, the bonding structure of the glass may become too rigid, resulting in poor solubility in water or the occurrence of devitrification phenomenon.

B₂O₃ and P₂O₅ are representative network-forming oxides, and are key components together with SiO₂, which enable sufficient vitrification.

Similarly to SiO₂, B₂O₃serves as a glass former to enable sufficient vitrification, and however, unlike to SiO₂, it lowers the glass transition temperature and melting temperature, and reduces chemical durability. That is, B₂O₃ is a main component allowing for easy dissolution in water. Although B₂O₃ required for plant growth is already sufficiently dissolved in seawater, an appropriate content of B₂O₃ needs to be added in order to realize water-soluble glass.

Glass to which P₂O₅ is added as a glass former has double-bonded oxygen, and thus, has low chemical durability, and, compared to other oxide components, has a strong hydrophilic property, resulting in easy dissolution in water. And, an appropriate amount of P may provide significant assistance in promoting the growth of plants. It is also a component that causes algal bloom phenomena in summer.

It is preferable that at least one kind of such B₂O₃ and P₂O₅ is added in a total amount of 20 to 70 wt% based on the total weight of the glass composition for algae growth according to the present invention, and its more preferable range may be 20 to 40 wt%.

When at least one kind of B₂O₃ and P₂O₅ is added in a total amount of less than 20 wt%, there is a concern that the hydrophilic property may be weak, resulting in difficult dissolution in water. On the other hand, when at least one kind of B₂O₃ and P₂O₅ is added in a total amount exceeding 70 wt%, the bonding structure of the glass may become too rigid, resulting in poor solubility in water or the occurrence of devitrification phenomenon.

Here, it is more preferable that B₂O₃ is added in an amount of 15 to 35 wt%, and that P₂O₅ is added in an amount of 1 to 20 wt%.

Alkali oxides such as Na₂O and K₂O may be said to exist in ionic form within the glass structure, as they do not form direct bridging bonds with oxygen. And, alkali oxides such as Na₂O and K₂O have lower electric field strength and weaker attractive force with regard to oxygen as the ionic radius increases and the valence decreases. Alkali oxides such as Na₂O and K₂O have weak bonding within the glass, thereby facilitating easy dissolution in water and also serving as nutrients for organisms. In particular, K is a substance widely used as a fertilizer together with N and P.

It is preferable that at least one kind of Na₂O and K₂O is added in a total amount of 1 to 30 wt% based on the total weight of the glass composition for algae growth according to the present invention, and its more preferable range may be 20 to 30 wt%. When at least one kind of Na₂O and K₂O is added in a total amount of less than 1 wt%, the fluxing agent becomes insufficient, which may cause the occurrence of a phenomenon where a non-molten material is formed due to deviation from the vitrification region. Conversely, when at least one kind of Na₂O and K₂O is added in a total amount exceeding 30 wt%, a rigid bonding structure of the glass may be formed, resulting in poor solubility in water or the occurrence of devitrification phenomenon.

Here, it is more preferable that Na₂O is added in 1 to 10 wt%, and that K₂O is added in 10 to 29 wt%.

Alkaline earth oxides such as CaO and MgO are oxides that basically serve as modifier oxides forming non-bridging bonds in glass. Alone, vitrification is not possible, but in the case of being mixed in a certain ratio with network-forming agent such as SiO₂ and B₂O₃, vitrification becomes possible. In addition, the electric field strength created by cations of alkali metal is relatively weaker compared to that of alkaline earth metal.

Such alkaline earth oxides like CaO and MgO serve to help them dissolve easily in water and also act as nutrients for organisms because their bonding in glass is not strong.

It is preferable that at least one kind of CaO and MgO is added in a total amount of 0.1 to 30 wt% based on the total weight of the glass composition for algae growth according to the present invention, and its more preferable range may be 0.1 to 5 wt%. When at least one kind of CaO and MgO is added in a total amount of less than 0.1 weight%, because they cannot strengthen the structure at the modifier oxide site, the decrease phenomenon of water resistance may occur, which leads to failure of alkali elution prevention. Conversely, when at least one kind of CaO and MgO is added in a total amount exceeding 30 weight%, because the alkaline earth oxides, which are substances that melt at high temperatures, cannot be sufficiently melted, which may cause the occurrence of a phenomenon where a non-molten material is formed due to deviation from the vitrification region.

When the glass dissolves in seawater, the trace metal oxide helps the growth of marine plants together, and serves as micronutrient essential for the growth of phytoplankton. Such trace metal oxide includes at least one kind selected from Fe₂O₃, CuO, NiO₂, Co₃O₄, CdO, and ZnO. Generally, dissolved metal elements present in seawater exist at concentrations of 10⁻¹² to 10⁻⁹ mol/L, and due to such low concentration, they are called trace elements or trace metals. Iron (Fe), copper (Cu), nickel (Ni), cobalt (Co), cadmium (Cd), zinc (Zn), and the like in the trace metal oxide are micronutrients essential for the growth of phytoplankton in the marine environment.

Therefore, the glass composition for algae growth according to the present invention includes the trace metal oxide added thereto, which functions as micronutrients essential for the growth of phytoplankton in the marine environment, thereby allowing nutrients for marine plants to be simultaneously provided as the glass dissolves.

It is preferable that the trace metal oxide is added in an amount of 0.1 to 30 wt% based on the total weight of the glass composition for algae growth according to the present invention, and its more preferable range may be 20 to 30 wt%. When the addition amount of the trace metal oxide is less than 0.1 wt%, it may be difficult to effectively exhibit the algae growth effect in the marine environment. Conversely, when the addition amount of the trace metal oxide exceeds 30 weight% and is excessively added, it may not exist in ionic state homogeneously within the glass, but instead partially form crystals, which may lead to deviation from the vitrification region, resulting in the occurrence of milky degeneration and the occurrence of a heterogenization phenomenon in which transparent glass is mixed.

It is preferable that such trace metal oxide is added in a total amount of 20 to 30 wt% of at least one kind selected from Fe₂O₃ and ZnO. In addition, it is preferable that the trace metal oxide is added in a total amount of 5 wt% or less of at least one kind selected from CuO, NiO₂, Co₃O₄, and CdO.

Hereinafter, with reference to the accompanying drawings, a method for producing glass powder for algae growth according to an embodiment of the present invention will be described.

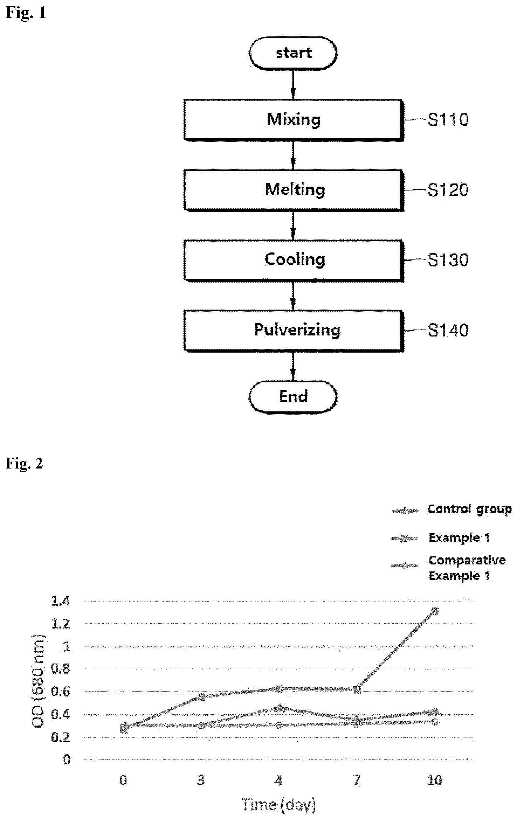

FIG. 1 is a process flowchart showing a method for manufacturing glass powder for algae growth according to an embodiment of the present invention.

As shown in FIG. 1, the method for manufacturing glass powder for algae growth according to an embodiment of the present invention includes a mixing step (S110), a melting step (S120), a cooling step (S130), and a pulverizing step (S140).

### Mixing

In the mixing step (S110), 1 to 50 wt% of SiO₂, 20 to 70 wt% in total of at least one kind selected from B₂O₃ and P₂O₅, 1 to 30 wt% in total of at least one kind selected from Na₂O and K₂O, 0.1 to 30 wt% in total of at least one kind selected from MgO and CaO, and 0.1 to 30 wt% of trace metal oxide are mixed and stirred to form a glass composition for algae growth.

Here, it is preferable to add SiO₂ in an amount of 10 to 30 weight%.

It is also preferable that B₂O₃ is added in an amount of 15 to 35 wt%, and that P₂O₅ is added in an amount of 1 to 20 wt%.

In addition, it is preferable that Na₂O is added in an amount of 1 to 10 wt%, and that K₂O is added in an amount of 10 to 29 wt%.

It is more preferable that the trace metal oxide is added in a total amount of 20 to 30 wt% of at least one kind selected from Fe₂O₃ and ZnO.

Herein, the trace metal oxide is added in a total amount of 5 wt% or less of at least one kind selected from CuO, NiO₂, Co₃O₄, and CdO.

### Melting

In the melting step (S120), the glass composition for algae growth is melted.

In this step, it is preferable to perform the melting at 1,000 to 1,300°C for 30 to 90 minutes. When the melting temperature is below 1,000°C or the melting time is less than 30 minutes, the glass composition for algae growth may not be completely melted, causing a problem of immiscibility of the glass molten material. Conversely, when the melting temperature exceeds 1,300°C or the melting time exceeds 90 minutes, excessive energy and time may be required, making it uneconomical.

### Cooling

In the cooling step (S130), the glass composition for algae growth which has been melted is cooled.

In this step, it is preferable that the cooling is carried out in a cooling-in-furnace manner. When air cooling or water cooling is applied, severe internal stress may be formed within the glass, which may lead to crack formation in some cases, and thus, the cooling in furnace is preferable.

### Pulverizing

In the pulverizing step (S140), the glass for algae growth which has been cooled is crushed to obtain glass powder for algae growth.

At this time, the pulverizing may be performed using any one selected from generally widely known ball mills, jet mills, and planetary mills.

By such pulverizing, the glass is finely crushed to manufacture glass powder for algae growth. The glass powder for algae growth preferably has an average particle diameter of 100 µm or less, and its more preferable range may be from 30 to 60 µm.

By the above processes (S110 to S140), the glass powder for algae growth according to an embodiment of the present invention can be manufactured.

The glass composition for algae growth manufactured by the above-described method according to an embodiment of the present invention has a trace metal oxide added thereto and containing an inorganic component capable of aiding the growth of marine plants, and is implemented as a water-soluble glass which dissolves well in water, so that it can appropriately supply nutrients to algae and the like in the sea.

As a result, the glass composition for algae growth manufactured by the method according to an embodiment of the present invention can promote the cultivation of diatoms as effectively as possible.

Also, the glass composition for algae growth manufactured by the method according to an embodiment of the present invention promotes the growth of microalgae by continuously supplying inorganic components over a long period.

Thereby, the glass composition for algae growth manufactured by the method according to an embodiment of the present invention can include components required in microalgae cultivation systems or aquaculture farms, and can precisely control the degree of dissolution in water to appropriately supply nutrients.

Further, when the glass composition for algae growth manufactured by the method according to an embodiment of the present invention is used as a glass fertilization agent for promoting marine algae growth, it can be manufactured in the form of a plate or pack and placed at marine algae growth spots such as artificial reefs, thereby supplying the inorganic nutrients in appropriate amounts required per hour to marine organisms to build a sea forest.

Besides, the glass composition for algae growth manufactured by the method according to an embodiment of the present invention has excellent effectiveness in removing algae that cause red tides.

Also, the glass composition for algae growth manufactured by the method according to an embodiment of the present invention may serve to supply feed organisms for abalone aquaculture farms.

In addition, the glass composition for algae growth manufactured by the method according to an embodiment of the present invention allows for the customization of the supplied nutrients.

### Example

Hereinafter, the configuration and operation of the present invention will be described in more detail through a preferred embodiment of the present invention. However, this is presented as a preferred example of the present invention, and the present invention is not to be construed as being limited thereto in any way.

The contents that can be sufficiently and technically inferred by those skilled in the art from the present disclosure may be omitted.

### 1. Manufacturing of Glass Powder Sample

Table 1 shows the compositions and composition ratios of a glass compositions according to Examples 1 to 2 and Comparative Examples 1 to 4. In this regard, the glass compositions arranged to have the compositions described in Examples 1 to 2 and Comparative Examples 1 to 4 were melted for 1 hour in an electric furnace maintained at 1,200°C, and then the molten glass was cooled in a glass bulk form on a stainless steel plate by air cooling. Thereafter, the cooled bulky glass was pulverized through a jet mill, and then was subjected to passing through a 150-mesh sieve and removal to have an average particle diameter of 100 µm or less. Here, as raw materials, SiO₂, B₂O₃, NH₄H₂PO₄, Na₂CO₃, K₂CO₃, MgO, CaCO₃, Fe₂O₃, CuO, NiO₂, Co₃O₄, CdO, and ZnO were used. In addition, vitrification was classified based on the case where a homogeneous glass phase was observed and the phenomenon in which milky degeneration and non-molten material occurred.

### 2. Marine microalgae cultivation

Diatoms are unicellular photosynthetic plants having a size of 1 to several hundred µm, and perform ecologically very important functions. The amount of carbon dioxide that such diatoms remove from the atmosphere accounts for as much as 20% or more, which is comparable to the amount of carbon dioxide removed by all tropical forests on Earth. Further, such diatoms produce 20 to 50% of the Earth's oxygen, and they can be commonly found anywhere in sea such as estuaries, coastal regions, and polar areas, and also in land such as rivers, lakes, and soil. The high survival rate and rapid growth of such diatoms can serve as a significant advantage in the environment, and fertilization agent for such diatoms can greatly improve the marine environment.

Thus, in the present Example, PT (Phaeodactylum tricornutum), which is one of the diatoms, was cultivated in order to confirm the effect on microalgae growth. PT (Phaeodactylum tricornutum) is a coastal diatom abundant in sea, and it adapts well even to unstable environments, and is easy to cultivate.

### 3. Microalgae growth test

For the growth effect test of PT (Phaeodactylum tricornutum), F/2 medium was prepared in sterilized seawater, and a distrubuted diatom culture solution was inoculated into a T-flask. In this regard, the composition of the seawater is shown in Table 2, and the composition of the F/2 medium is shown in Tables 3 and 4.

**[Table 1] (Unit: wt%)**

| **Classification** | **Example 1** | **Example 2** | **Comparative Example 1** | **Comparative Example 2** | **Comparativ e Example 3** | **Comparative Example 4** |
|---|---|---|---|---|---|---|
| **SiO₂** | **25** | **15** | **-** | **5** | **-** | **10** |
| **B₂O₃** | **20** | **20** | **65** | **35** | **28** | **20** |
| **P₂O₅** | **3** | **12** | **-** | **-** | **-** | **20** |
| **Na₂O** | **5** | **2** | **18** | **-** | **9** | **-** |
| **K₂O** | **17** | **25** | **17** | **-** | **9** | **-** |
| **CaO** | **-** | **-** | **-** | **5** | **9** | **-** |
| **MaO** | **1** | **1** | **-** | **-** | **-** | **10** |
| **Fe₂O₃** | **28** | **24** | **-** | **-** | **-** | **-** |
| **ZnO** | **1** | **1** | **-** | **55** | **45** | **40** |
| **Sum** | **100** | **100** | **100** | **100** | **100** | **100** |
| **Vitrification** | **○** | **○** | **○** | **○** | **○** | **×** |

**[Table 2]**

| **Measurement method** | **Measured Component** | |
|---|---|---|
| **HUMAS Kit (Unit: mg/L)** | **COD** | **<5** |
| | **T-N** | **7.402** |
| | **T-P** | **< 0.01** |
| | **NH₄-N** | **2.973** |
| | **NO₂-N** | **< 0.1** |
| | **NO₃-N** | **< 0.5** |
| **Standard test method (Unit: g/L)** | **TDS** | **38.42** |

**[Table 3]**

| **Measured Component** | |
|---|---|
| **Compound** | **g/L** |
| **FeCl₃ · 4H₂O** | **2.317** |
| **Na₂EDTA · 2H₂O** | **4.36** |
| **CuSO₄ · 5H₂O** | **0.0098** |
| **Na₂MoO₄ · 2H₂O** | **0.0063** |
| **ZnSO₄ · 7H₂O** | **0.022** |
| **CoCl₂ · 6H₂O** | **0.01** |
| **MnCl₂ · 4H₂O** | **0.18** |

| **Substrate Stock solution (×100)** | |
|---|---|
| **Compound** | **g/L** |
| **NaNO₃** | **7.5** |
| **NaH₂PO₄** | **0.58** |

**[Table 4]**

| **F/2 Vitamin Stock solution** | |
|---|---|
| **Stock** | **Stock solution** |
| **1. Vitamin B12 (Cyanocobalamin)** | **5mg/5mL distilled H₂O** |
| **2. Biotin** | **1 mg/10mL distilled H₂O** |
| **The above Vitamin B12 and Biotin were added to 100 mL of distilled water in stock solutions of the amounts specified below.** | |
| **1. Vitamin B12** | **0.1 mL** |
| **2. Biotin** | **1.0 mL** |
| **3. Thiamine HCl** | **20 mg** |

### 4. Diatom growth trend test

Table 5 shows the OD (Optical Density 680 nm) absorbance measurement results for each diatom growth trend using the antibacterial glass according to Example 1 and Comparative Example 1, and FIG. 2 is a graph showing the OD (Optical Density, 680 nm) absorbance measurement results for each diatom growth trend using the antibacterial glass according to Example 1 and Comparative Example 1. In this regard, three flasks were prepared, into which the diatom culture solution had been inoculated, and then, 500 mg/L of the glass powder manufactured according to Example 1 and Comparative Example 1 was added to two of the flasks, but no glass powder was added to the remaining one flask (base flask), and the growth effect of the microalgae was observed. The cultivation conditions were as follows: continuous aeration with air; and performing light-dark cycles using a quantity of light of 3,000 lux at 12-hour intervals. In addition, the temperature was maintained at 25°C, and stirring was performed at 150 rpm.

**[Table 5]**

| | | | | | |
|---|---|---|---|---|---|
| **[114] Absorbance** | **[115] 0** | **[116] 3** | **[117] 4** | **[118] 7** | **[119] 10** |
| **[120] Base** | **[121] 0.31** | **[122] 0.31** | **[123] 0.46** | **[124] 0.35** | **[125] 0.43** |
| **[126] Example 1** | **[127] 0.27** | **[128] 0.561** | **[129] 0.629** | **[130] 0.625** | **[131] 1.314** |
| **[132] Comparative Example 1** | **[133] 0.31** | **[134] 0.3** | **[135] 0.31** | **[136] 0.32** | **[137] 0.34** |

As shown in Table 1, the glass compositions according to Examples 1 to 2 and Comparative Examples 1 to 3 underwent vitrification, whereas the glass composition according to Comparative Example 4 did not undergo vitrification.

Also, as shown in Tables 2 to 5 and FIG. 2, through the comparison result of diatom growth trends based on the absorbance at OD (Optical Density, 680 nm), it can be confirmed that the flask to which the glass powder according to Example 1 was added showed a significantly increased diatom growth rate compared to both the flask to which no glass powder is added and the flask to which the glass powder according to Comparative Example 1 was added.

Although the present invention has been described with reference to the illustrative drawings as the above, the present invention is not limited to the embodiments and drawings disclosed in this specification, and it is obvious that various modifications can be made by those skilled in the art without departing from the scope of the technical idea of the present invention. Additionally, even if the effects related to the configuration of the present invention were not explicitly described while explaining the embodiments of the present invention, it is obvious that the effects predictable from the configuration should also be acknowledged.

### Explanation of Reference Signs

S110 : Mixing step
S120 : Melting step
S130 : Cooling step
S140 : Pulverizing step

## Claims

1. A glass composition for algae growth comprising:
1 to 50 wt% of SiO₂;
20 to 70 wt% in total of at least one kind selected from B₂O₃ and P₂O₅;
1 to 30 wt% in total of at least one kind selected from Na₂O and K₂O;
0.1 to 30 wt% in total of at least one kind selected from MgO and CaO; and
0.1 to 30 wt% of trace metal oxide,
wherein the trace metal oxide includes at least one kind selected from Fe₂O₃, CuO, NiO₂, Co₃O₄, CdO, and ZnO.

2. The glass composition for algae growth of claim 1, wherein said SiO₂ is added in an amount of 10 to 30 wt%.

3. The glass composition for algae growth of claim 1, wherein said B₂O₃ is added in an amount of 15 to 35 wt%, and
wherein said P₂O₅ is added in an amount of 1 to 20 wt%.

4. The glass composition for algae growth of claim 1, wherein said Na₂O is added in an amount of 1 to 10 wt%, and
wherein said K₂O is added in an amount of 10 to 29 wt%.

5. The glass composition for algae growth of claim 1, wherein the trace metal oxide is added in a total amount of 20 to 30 wt% of at least one kind selected from Fe₂O₃ and ZnO.

6. The glass composition for algae growth of claim 1, wherein the trace metal oxide is added in a total amount of 5 wt% or less of at least one kind selected from CuO, NiO₂, Co₃O₄, and CdO.

7. A method for manufacturing glass powder for algae growth, the method comprising the steps of:
(a) mixing and stirring 1 to 50 wt% of SiO₂, 20 to 70 wt% in total of at least one kind selected from B₂O₃ and P₂O₅, 1 to 30 wt% in total of at least one kind selected from Na₂O and K₂O, 0.1 to 30 wt% in total of at least one kind selected from MgO and CaO, and 0.1 to 30 wt% of trace metal oxide to form a glass composition for algae growth;
(b) melting the glass composition for algae growth;
(c) cooling the glass composition for algae growth which has been melted; and
(d) pulverizing the glass for algae growth which has been cooled to obtain glass powder for algae growth,
wherein in the step (a), the trace metal oxide includes at least one kind selected from Fe₂O₃, CuO, NiO₂, Co₃O₄, CdO, and ZnO.

8. The method for manufacturing glass powder for algae growth of claim 7, wherein in the step (a), said SiO₂ is added in an amount of 10 to 30 wt%.

9. The method for manufacturing glass powder for algae growth of claim 7, wherein in the step (a), said B₂O₃ is added in an amount of 15 to 35 wt%, and said P₂O₅ is added in an amount of 1 to 20 wt%.

10. The method for manufacturing glass powder for algae growth of claim 7, wherein in the step (a), said Na₂O is added in an amount of 1 to 10 wt%, and said K₂O is added in an amount of 10 to 29 wt%.

11. The method for manufacturing glass powder for algae growth of claim 7, wherein in the step (a), the trace metal oxide is added in a total amount of 20 to 30 wt% of at least one kind selected from Fe₂O₃ and ZnO.

12. The method for manufacturing glass powder for algae growth of claim 7, wherein in the step (a), the trace metal oxide is added in a total amount of 5 wt% or less of at least one kind selected from CuO, NiO₂, Co₃O₄, and CdO.

13. The method for manufacturing glass powder for algae growth of claim 7, wherein in the step (b), the melting is performed at 1,000°C to 1,300°C for 30 to 90 minutes.

14. The method for manufacturing glass powder for algae growth of claim 7, wherein in the step (d), the glass powder for algae growth has an average diameter of 100 µm or less.
